# EUROPEAN PATENT APPLICATION

(11) **EP 4 336 902 A1**
(43) Date of publication of application: **13.03.2024**
(21) Application number: 21939710.6
(22) Date of filing: 07.05.2021
(51) Int. Cl.: H04W 36/00

(54) **METHOD FOR RELEASING REMOTE TERMINAL DEVICE AND APPARATUS THEREFOR**

(71) Applicant: Beijing Xiaomi Mobile Software Co., Ltd., Beijing 100085 (CN)
(72) Inventor: YANG, Xing, Beijing 100085 (CN)
(74) Representative: Hughes, Andrea Michelle
(86) International application number: PCT/CN2021/092237
(87) International publication number: WO 2022/233064

(57) **Abstract**

Embodiments of the present disclosure disclose a method for releasing a remote terminal device and an apparatus therefor, which can be applied to the technical field of communications. The method which is configured to be performed by a relay terminal device comprises: in response to a specified condition being satisfied, sending first release instruction information to a remote terminal device, the first release instruction information being used for instructing the remote terminal device to release a relay terminal device. Therefore, communication failure in a remote terminal device caused by the impact of a relay terminal device can be effectively reduced, thus providing a guarantee for communication transmission, and thereby improving the quality of communication transmission.

## Description

### FIELD

The present disclosure relates to the technical field of communications, and more particularly to a method for releasing a remote terminal and an apparatus for releasing a remote terminal.

### BACKGROUND

In a communication system, a remote terminal may communicate with a network device through a relay of a relay terminal instead of directly connecting with the network device. When the relay terminal performs a cell handover, the remote terminal may also need to reselect a relay terminal or select a cell, in order to realize communication with the network device.

At present, when the relay terminal performs the cell handover, the remote terminal cannot know a handover operation performed by the relay terminal, which may cause a communication interruption and affect a communication transmission.

### SUMMARY

Embodiments of the present disclosure provide a method for releasing a remote terminal and an apparatus for releasing a remote terminal, which may be applied to the technical field of communications.

In a first aspect, an embodiment of the present disclosure provides a method for releasing a remote terminal, and the method is configured to be performed by a relay terminal. The method includes sending first release indication information to the remote terminal, in response to a specified condition being satisfied, in which the first release indication information is configured to indicate the remote terminal to release the relay terminal.

In this solution, in case that the specified condition is satisfied, the relay terminal may send the first release indication information to the remote terminal, so that the remote terminal releases the relay terminal. Therefore, a communication failure in the remote terminal caused by the impact of the relay terminal may be effectively reduced, thus providing a guarantee for a communication transmission, and further improving the quality of the communication transmission.

Additionally, sending the first release indication information to the remote terminal, in response to the specified condition being satisfied includes sending the first release indication information to the remote terminal, in response to receiving a synchronous reconfiguration indication, or sending the first release indication information to the remote terminal, in response to receiving a synchronous reconfiguration indication, and a target cell identifier in the synchronous reconfiguration indication being different from a source cell identifier, or sending the first release indication information to the remote terminal, in response to receiving a synchronous reconfiguration indication, and the relay terminal not containing bearer configuration information of a dual active protocol solution (DAPS), or sending the first release indication information to the remote terminal, in response to receiving a synchronous reconfiguration indication, and a bearer currently configured to bear a transmission of the remote terminal not being a DAPS bearer.

Additionally, sending the first release indication information to the remote terminal, in response to the specified condition being satisfied includes sending the first release indication information to the remote terminal, in response to performing a synchronous reconfiguration process, or sending the first release indication information to the remote terminal, in response to performing a synchronous reconfiguration process, and a target cell identifier in the synchronous reconfiguration being different from a source cell identifier, or sending the first release indication information to the remote terminal, in response to performing a synchronous reconfiguration process, and the relay terminal not containing bearer configuration information of the dual active protocol solution (DAPS), or sending the first release indication information to the remote terminal, in response to performing a synchronous reconfiguration process, and a bearer currently configured to bear a transmission of the remote terminal not being a DAPS bearer.

Additionally, sending the first release indication information to the remote terminal, in response to the specified condition being satisfied includes sending the first release indication information to the remote terminal, in response to receiving second release indication information sent by a target cell, in which the second release indication information is configured to indicate the relay terminal to release a source cell, or sending the first release indication information to the remote terminal, in response to a cell handover trigger condition being satisfied.

Additionally, the method further includes determining the cell handover trigger condition according to an agreement of a protocol, or determining the cell handover trigger condition according to an indication from a network device.

Additionally, sending the first release indication information to the remote terminal includes sending the first release indication information to the remote terminal by broadcasting, and/or sending the first release indication information to the remote terminal by unicasting.

Additionally, the method further includes stopping sending a relay discovery signal.

In a second aspect, an embodiment of the present disclosure provides another method for releasing a remote terminal, and the method is configured to be performed by the remote terminal. The method includes receiving first release indication information sent by a first relay terminal, in which the first release indication information is configured to indicate the remote terminal to release the first relay terminal.

In this solution, the remote terminal receives the first release indication information sent by the first relay terminal to release the first relay terminal. Therefore, a communication failure in the remote terminal caused by the impact of the first relay terminal may be effectively reduced, thus providing a guarantee for a communication transmission, and further improving the quality of the communication transmission.

Additionally, the method further includes releasing a connection with the first relay terminal.

Additionally, the method further includes performing a relay reselection to determine a second relay terminal, in which the second relay terminal is the first relay terminal or other terminals, or performing a cell selection and determining a network device to be accessed.

Additionally, the method further includes sending a connection establishment request to the second relay terminal, or sending a connection establishment request to the network device.

In a third aspect, an embodiment of the present disclosure provides a communication apparatus, and the apparatus is configured on a relay terminal side. The apparatus includes a transceiver module configured to send first release indication information to a remote terminal, in response to a specified condition being satisfied, in which the first release indication information is configured to indicate the remote terminal to release the relay terminal.

Additionally, the transceiver module is specifically configured to send the first release indication information to the remote terminal, in response to receiving a synchronous reconfiguration indication, or send the first release indication information to the remote terminal, in response to receiving a synchronous reconfiguration indication, and a target cell identifier in the synchronous reconfiguration indication being different from a source cell identifier, or send the first release indication information to the remote terminal, in response to receiving a synchronous reconfiguration indication, and the relay terminal not containing bearer configuration information of a dual active protocol solution (DAPS), or send the first release indication information to the remote terminal, in response to receiving a synchronous reconfiguration indication, and a bearer currently configured to bear a transmission of the remote terminal not being a DAPS bearer.

Additionally, the transceiver module is specifically configured to send the first release indication information to the remote terminal, in response to performing a synchronous reconfiguration process, or send the first release indication information to the remote terminal, in response to performing a synchronous reconfiguration process, and a target cell identifier in the synchronous reconfiguration being different from a source cell identifier, or send the first release indication information to the remote terminal, in response to performing a synchronous reconfiguration process, and the relay terminal not containing bearer configuration information of the dual active protocol solution (DAPS), or send the first release indication information to the remote terminal, in response to performing a synchronous reconfiguration process, and a bearer currently configured to bear a transmission of the remote terminal not being a DAPS bearer.

Additionally, the transceiver module is specifically configured to send the first release indication information to the remote terminal, in response to receiving second release indication information sent by a target cell, in which the second release indication information is configured to indicate the relay terminal to release a source cell, or send the first release indication information to the remote terminal, in response to a cell handover trigger condition being satisfied.

Additionally, the apparatus further includes a processing module. The processing module is configured to determine the cell handover trigger condition according to an agreement of a protocol. Alternatively, the processing module is configured to determine the cell handover trigger condition according to an indication from a network device.

Additionally, the transceiver module is specifically configured to send the first release indication information to the remote terminal by broadcasting, and/or send the first release indication information to the remote terminal by unicasting.

Additionally, the transceiver module is further configured to stop sending a relay discovery signal.

In a fourth aspect, an embodiment of the present disclosure provides another communication apparatus, and the apparatus is configured on a remote terminal side. The apparatus includes a transceiver module configured to receive first release indication information sent by a first relay terminal, in which the first release indication information is configured to indicate the remote terminal to release the first relay terminal.

Additionally, the apparatus further includes a processing module. The processing module is configured to release a connection with the first relay terminal.

Additionally, the processing module is further configured to perform a relay reselection to determine a second relay terminal, in which the second relay terminal is the first relay terminal or other terminals, or perform a cell selection and determining a network device to be accessed.

Additionally, the transceiver module is further configured to send a connection establishment request to the second relay terminal, or send a connection establishment request to the network device.

In a fifth aspect, an embodiment of the present disclosure provides a communication device. The communication device includes a processor that, when invoking a computer program in a memory, causes the method described in the first aspect to be implemented.

In a sixth aspect, an embodiment of the present disclosure provides a communication device. The communication device includes a processor that, when invoking a computer program in a memory, causes the method described in the second aspect to be implemented.

In a seventh aspect, an embodiment of the present disclosure provides a communication device. The communication device includes a processor, and a memory. A computer program is stored in the memory, and the processor executes the computer program stored in the memory to cause the communication device to perform the method described in the first aspect.

In an eighth aspect, an embodiment of the present disclosure provides a communication device. The communication device includes a processor, and a memory. A computer program is stored in the memory, and the processor executes the computer program stored in the memory to cause the communication device to perform the method described in the second aspect.

In a ninth aspect, an embodiment of the present disclosure provides a communication device. The communication device includes an interface circuit configured to receive code instructions and transmit the code instructions to a processor, and the processor configured to execute the code instructions to execute the method described in the first aspect.

In a tenth aspect, an embodiment of the present disclosure provides a communication device. The communication device includes an interface circuit configured to receive code instructions and transmit the code instructions to a processor, and the processor configured to execute the code instructions to execute the method described in the second aspect.

An eleventh aspect, an embodiment of the present disclosure provides a system for releasing a remote terminal. The system includes the communication apparatus described in the third aspect and the communication apparatus described in the fourth aspect. Alternatively, the system includes the communication device described in the fifth aspect and the communication device described in the sixth aspect. Alternatively, the system includes the communication device described in the seventh aspect and the communication device described in the eighth aspect. Alternatively, the system includes the communication device described in the ninth aspect and the communication device described in the tenth aspect.

In a twelfth aspect, an embodiment of the present invention provides a computer-readable storage medium. The computer-readable storage medium has stored therein instructions that, when executed, cause the method described in the first aspect to be implemented.

In a thirteenth aspect, an embodiment of the present invention provides a computer-readable storage medium. The computer-readable storage medium has stored therein instructions that, when executed, cause the method described in the second aspect to be implemented.

In a fourteenth aspect, the present disclosure also provides a computer program product. The computer program product includes a computer program that, when run on a computer, causes the computer to perform the method described in the first aspect.

In a fifteenth aspect, the present disclosure also provides a computer program product. The computer program product includes a computer program that, when run on a computer, causes the computer to perform the method described in the second aspect.

In a sixteenth aspect, the present disclosure provides a chip system. The chip system includes at least one processor and an interface, and is configured to support the relay terminal to implement functions involved in the first aspect, for example, determining or processing at least one of data and information involved in the above-mentioned method. In a possible design, the chip system further includes a memory configured to store necessary computer programs and data of the relay terminal. The chip system may be composed of chips, and may also include chips and other discrete devices.

In a seventeenth aspect, the present disclosure provides a chip system. The chip system includes at least one processor and an interface, and is configured to support the remote terminal to implement functions involved in the second aspect, for example, determining or processing at least one of data and information involved in the above-mentioned method. In a possible design, the chip system further includes a memory configured to store necessary computer programs and data of the remote terminal. The chip system may be composed of chips, and may also include chips and other discrete devices.

In an eighteenth aspect, the present disclosure provides a computer program that, when run on a computer, causes the computer to perform the method described in the first aspect.

In a nineteenth aspect, the present disclosure provides a computer program that, when run on a computer, causes the computer to perform the method described in the second aspect above.

### BRIEF DESCRIPTION OF THE DRAWINGS

In order to more clearly illustrate technical solutions in embodiments of the present disclosure or the background, the following description will be given to the accompanying drawings, which are needed to be used in the embodiments of the present disclosure or the background.
FIG. 1 is a schematic diagram of a communication system provided in an embodiment of the present disclosure.
FIG. 2 is a flow chart of a method for releasing a remote terminal provided in an embodiment of the present disclosure.
FIG. 3 is a flow chart of a method for releasing a remote terminal provided in another embodiment of the present disclosure.
FIG. 4 is a flow chart of a method for releasing a remote terminal provided in another embodiment of the present disclosure.
FIG. 5 is a flow chart of a method for releasing a remote terminal provided in another embodiment of the present disclosure.
FIG. 6 is a flow chart of a method for releasing a remote terminal provided in another embodiment of the present disclosure.
FIG. 7 is a flow chart of a method for releasing a remote terminal provided in another embodiment of the present disclosure.
FIG. 8 is a flow chart of a method for releasing a remote terminal provided in another embodiment of the present disclosure.
FIG. 9 is a flow chart of a method for releasing a remote terminal provided in another embodiment of the present disclosure.
FIG. 10 is a flow chart of a method for releasing a remote terminal provided in another embodiment of the present disclosure.
FIG. 11 is a flow chart of a method for releasing a remote terminal provided in another embodiment of the present disclosure.
FIG. 12 is a flow chart of a method for releasing a remote terminal provided in an embodiment of the present disclosure.
FIG. 13 is a flow chart of a method for releasing a remote terminal provided in another embodiment of the present disclosure.
FIG. 14 is a flow chart of a method for releasing a remote terminal provided in another embodiment of the present disclosure.
FIG. 15 is a flow chart of a method for releasing a remote terminal provided in another embodiment of the present disclosure.
FIG. 16 is a flow chart of a method for releasing a remote terminal provided in another embodiment of the present disclosure.
FIG. 17 is a schematic diagram of a communication apparatus according to an embodiment of the present disclosure.
FIG. 18 is a schematic diagram of a communication device according to another embodiment of the present disclosure.
FIG. 19 is a schematic diagram of a chip according to an embodiment of the present disclosure.

### DETAILED DESCRIPTION

For ease of understanding, terms involved in the present disclosure are firstly introduced.

### Synchronous reconfiguration (reconfiguration with sync)

A relay terminal may perform an inter-cell handover by performing a synchronous reconfiguration. That is, an original radio resource control (RRC) connection is disconnected, and a new RRC connection is re-established to perform the inter-cell handover.

### 2. Dual active protocol solution (DAPS)

A dual active protocol solution (DAPS) may maintain a connection with a source cell for a relay terminal after receiving a handover command to perform a handover, initiate a random access process to a target cell at the same time, and release the connection with the source cell after successfully establishing a connection with the target cell.

In order to better understand a method for releasing a remote terminal disclosed in an embodiment of the present disclosure, a communication system to which the embodiment of the present disclosure is applicable is firstly described below.

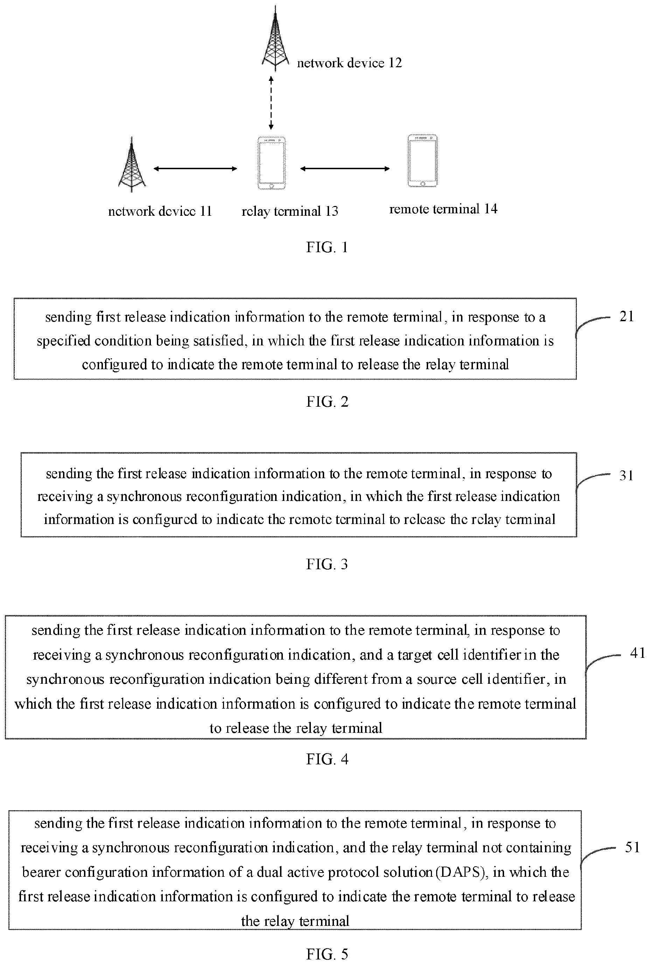

Referring to FIG. 1, FIG. 1 is a schematic diagram of a communication system provided in an embodiment of the present disclosure. The communication system may include, but is not limited to, a network device, a relay terminal, and a remote terminal. The number and form of devices shown in FIG. 1 are for illustration merely, and do not constitute a limitation of the embodiment of the present disclosure. In a practical application, the communication system may include two or more network devices, two or more relay terminals, and two or more remote terminals. The communication system shown in FIG. 1 includes a network device 11 and a network device 12, a relay terminal 13, and a remote terminal 14 as an example.

It is to be noted that the technical solution of the embodiment of the present disclosure may be applied to various communication systems, for example: a long term evolution (LTE) system, a 5^{th} generation (5G) mobile communication system, a 5G new radio (NR) system, or other future new mobile communication systems, etc.

The network device 11 in the embodiment of the present disclosure is an entity on a network side for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system, etc. A specific technology and a specific device form adopted by the network device are not limited in the embodiment of the present disclosure. The network device provided in the embodiment of the present disclosure may be composed of a central unit (CU) and a distributed unit (DU). The CU may also be referred to as a control unit. A structure adopting a CU-DU may separate the network device, such as protocol layers of a base station, functions of part of the protocol layers are centralized controlled by the CU, functions of the remaining part or all of the protocol layers are distributed in the DU, and the DU is centrally controlled by the CU.

For the specific content of the network device 12 in the embodiment of the present disclosure, reference may be made to the description of the above-mentioned network device 11, which will not be elaborated herein.

The relay terminal 13 in the embodiment of the present disclosure is an entity on a user side configured to receive or transmitting signals, such as a mobile phone. A terminal may also be referred to as a terminal device, a user equipment (UE), a mobile station (MS), a mobile terminal (MT), and so on. The terminal may be a car with a communication function, a smart car, a mobile phone, a wearable device, a Pad, a computer with a wireless transceiver function, a virtual reality (VR) terminal, an augmented reality (AR) terminal, a wireless terminal in an industrial control, a wireless terminal in self-driving, a wireless terminal in a remote medical surgery, a wireless terminal in smart grid, a wireless terminal in transportation safety, a wireless terminal in a smart city, a wireless terminal in a smart home, etc. A specific technology and a specific device form adopted by the terminal are not limited in the embodiment of the present disclosure.

For the specific content of the remote terminal 14 in the embodiment of the present disclosure, reference may be made to the description of the above-mentioned relay terminal 13, which will not be elaborated herein.

It may be understood that the network device 11 may be a device that is communicating with the relay terminal 13 in the communication system, and the network device 12 may be any device in the communication system that may provide a network communication service for the relay terminal 13, etc., which is not limited in the present disclosure.

It may be understood that the communication system described in the embodiment of the present disclosure is to illustrate the technical solution of the embodiment of the present disclosure more clearly, and does not constitute a limitation of the technical solution provided in the embodiment of the present disclosure. It is known by those of ordinary skill in the art that with the evolution of a system architecture and the emergence of new business scenarios, the technical solution provided in the embodiment of the present disclosure is also applicable to similar technical problems.

A method for releasing a remote terminal and an apparatus for releasing a remote terminal provided in the present disclosure will be described in detail with reference to the accompanying drawings.

It may be understood by those skilled in the art that the technical solutions of each of the following embodiments may be implemented alone, or may be implemented together with any other technical solution in the embodiment of the present disclosure, which is not limited in the embodiment of the present disclosure.

Referring to FIG. 2, FIG. 2 is a flow chart of a method for releasing a remote terminal provided in an embodiment of the present disclosure. The method is configured to be performed by a relay terminal. As shown in FIG. 2, the method may include, but is not limited to, a step as follows.

In step 21, first release indication information is sent to the remote terminal, in response to a specified condition being satisfied, in which the first release indication information is configured to indicate the remote terminal to release the relay terminal.

The specified condition may refer to any condition that may affect a normal communication of the remote terminal. The specified condition may be specified in a protocol, or may be configured by a network device for the relay terminal, etc., which is not limited in the present disclosure.

In the embodiment of the present disclosure, in case that the specified condition is satisfied, the relay terminal sends the first release indication information to the remote terminal, so that the remote terminal releases the relay terminal in time to reselect a relay terminal or select a cell. Therefore, a communication failure in the remote terminal caused by the impact of the relay terminal may be reduced, thus providing a guarantee for a communication transmission, and further improving the quality and efficiency of the communication transmission.

By implementing the embodiment of the present disclosure, in case that the specified condition is satisfied, the relay terminal may send the first release indication information to the remote terminal, so that the remote terminal releases the relay terminal. Therefore, a communication failure in the remote terminal caused by the impact of the relay terminal may be reduced, thus providing a guarantee for the communication transmission, and further improving the quality of the communication transmission.

Referring to FIG. 3, FIG. 3 is a flow chart of a method for releasing a remote terminal provided in an embodiment of the present disclosure. The method is configured to be performed by a relay terminal. As shown in FIG. 3, the method may include, but is not limited to, a step as follows.

In step 31, the first release indication information is sent to the remote terminal, in response to receiving a synchronous reconfiguration indication, in which the first release indication information is configured to indicate the remote terminal to release the relay terminal.

The synchronous reconfiguration indication may be sent by a network device to the relay terminal. When receiving the synchronous reconfiguration indication, the relay terminal may perform a cell handover according to the synchronous reconfiguration indication.

Usually, when the relay terminal perform the cell handover, a communication transmission of the remote terminal may also be affected, and the remote terminal may also need to reselect a relay terminal or select a cell, but the remote terminal cannot know a handover operation performed by the relay terminal in time, which may cause the remote terminal to fail to communicate normally and affect the efficiency and quality of the communication transmission.

In the embodiment of the present disclosure, when receiving the synchronous reconfiguration indication, the relay terminal may send the first release indication information to the remote terminal, so that the remote terminal may know the handover operation performed by the relay terminal in time and release the relay terminal in time. Therefore, a communication failure in the remote terminal caused by the impact of the relay terminal may be avoided, thus providing a guarantee for the communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when receiving the synchronous reconfiguration indication, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

Referring to FIG. 4, FIG. 4 is a flow chart of a method for releasing a remote terminal provided in an embodiment of the present disclosure. The method is configured to be performed by a relay terminal. As shown in FIG. 4, the method may include, but is not limited to, a step as follows.

In step 41, the first release indication information is sent to the remote terminal, in response to receiving a synchronous reconfiguration indication, and a target cell identifier in the synchronous reconfiguration indication being different from a source cell identifier, in which the first release indication information is configured to indicate the remote terminal to release the relay terminal.

When receiving the synchronous reconfiguration indication, the relay terminal may perform a cell handover according to the synchronous reconfiguration indication.

It may be understood that each cell has its own corresponding cell identifier. When the target cell identifier in the synchronous reconfiguration indication is different from the source cell identifier, it may be indicated that the relay terminal needs to switch from the source cell to the target cell in the synchronous reconfiguration indication for a communication transmission.

In the embodiment of the present disclosure, when the relay terminal receives the synchronous reconfiguration indication and the target cell identifier in the synchronous reconfiguration indication is different from the source cell identifier, the relay terminal may send the first release indication information to the remote terminal, so that the remote terminal may know a handover operation performed by the relay terminal and release the relay terminal in time. Therefore, a communication failure in the remote terminal caused by the impact of the relay terminal may be avoided, thus providing a guarantee for the communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when the relay terminal receives the synchronous reconfiguration indication and the target cell identifier in the synchronous reconfiguration indication is different from the source cell identifier, the relay terminal may send the first release indication information to the remote terminal, so that the remote terminal releases the relay terminal. Therefore, a communication failure in the remote terminal caused by the impact of relay terminal may be effectively reduced, thus providing a guarantee for the communication transmission, and further improving the quality of the communication transmission.

Referring to FIG. 5, FIG. 5 is a flow chart of a method for releasing a remote terminal provided in an embodiment of the present disclosure. The method is configured to be performed by a relay terminal. As shown in FIG. 5, the method may include, but is not limited to, a step as follows.

In step 51, the first release indication information is sent to the remote terminal, in response to receiving a synchronous reconfiguration indication, and the relay terminal not containing bearer configuration information of a dual active protocol solution (DAPS), in which the first release indication information is configured to indicate the remote terminal to release the relay terminal.

When receiving the synchronous reconfiguration indication, the relay terminal may perform a cell handover according to the synchronous reconfiguration indication.

It may be understood that when the relay terminal contains the bearer configuration information of the DAPS, the relay terminal may maintain a connection with the source cell and initiate a random access process to a target cell at the same time when performing the cell handover. After successfully establishing a connection with the target cell, the relay terminal disconnects the connection with the source cell, so that a normal communication with the network device may be maintained, and a communication process between the remote terminal and the network device may also be unaffected.

Correspondingly, in case that the relay terminal does not contain the bearer configuration information of the DAPS, the relay terminal disconnects the connection with the source cell when receiving the synchronous reconfiguration indication to perform the cell handover. Before successfully establishing a connection with the target cell, a data transmission and reception of the relay terminal is interrupted, and a data transmission and reception of the remote terminal that relies on the relay terminal to communicate with the network device is also in an interrupted state, so that a communication transmission cannot be performed in time, which may cause a service delay and affect the quality and efficiency of the communication transmission.

Therefore, in the embodiment of the present disclosure, when the relay terminal receives the synchronous reconfiguration indication and the relay terminal does not contain the bearer configuration information of the DAPS, the relay terminal may send the first release indication information to the remote terminal, so that the remote terminal may know a handover operation performed by the relay terminal and release the relay terminal in time. Therefore, a communication failure in the remote terminal caused by the handover operation performed by the relay terminal may be avoided, thus providing a guarantee for the communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when the relay terminal receives the synchronous reconfiguration indication and the relay terminal does not contain the bearer configuration information of the DAPS, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

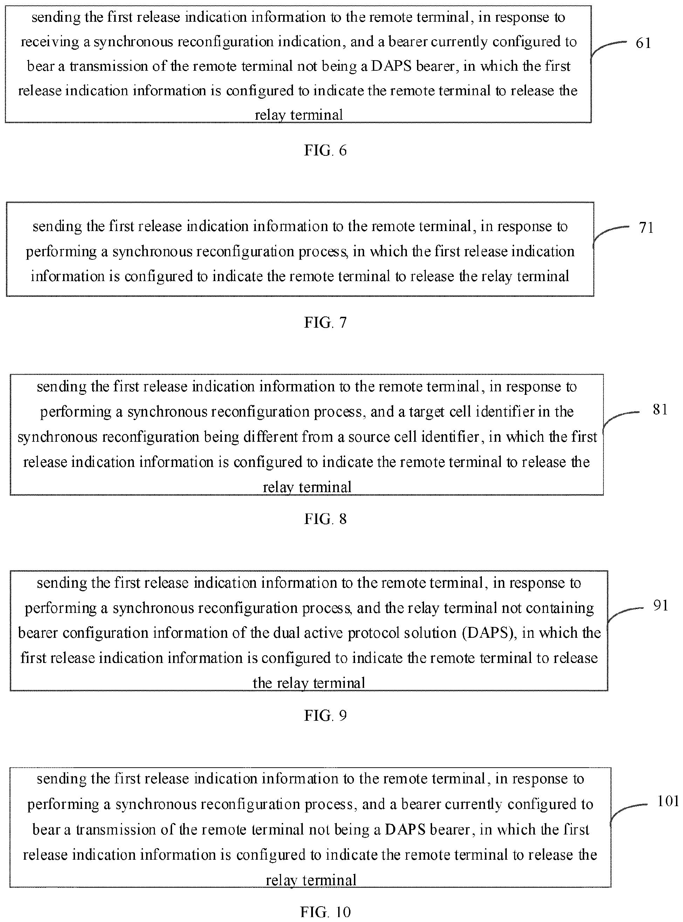

Referring to FIG. 6, FIG. 6 is a flow chart of a method for releasing a remote terminal provided in an embodiment of the present disclosure. The method is configured to be performed by a relay terminal. As shown in FIG. 6, the method may include, but is not limited to, a step as follows.

In step 61, the first release indication information is sent to the remote terminal, in response to receiving a synchronous reconfiguration indication, and a bearer currently configured to bear a transmission of the remote terminal not being a DAPS bearer, in which the first release indication information is configured to indicate the remote terminal to release the relay terminal.

When receiving the synchronous reconfiguration indication, the relay terminal may perform a cell handover according to the synchronous reconfiguration indication.

It may be understood that when the bearer configured to bear the transmission of the remote terminal is not the DAPS bearer, it may be indicated that a bearer used by the relay terminal transmitting with the remote terminal is also not the DAPS bearer. Therefore, when receiving the synchronous reconfiguration indication to perform the cell handover, the relay terminal disconnects the connection with the source cell. Before successfully establishing a connection with the target cell, a data transmission and reception of the relay terminal is interrupted. However, the remote terminal cannot know an operation performed by the relay terminal, so the remote terminal cannot perform a communication transmission in time, which may cause a service delay and affect the quality and efficiency of the communication transmission.

Therefore, in the embodiment of the present disclosure, when the relay terminal receives the synchronous reconfiguration indication and the bearer currently configured to bear the transmission of the remote terminal is not the DAPS bearer, the relay terminal may send the first release indication information to the remote terminal, so that the remote terminal may know the handover operation performed by the relay terminal and release the relay terminal in time. Therefore, a communication failure in the remote terminal caused by the handover operation performed by the relay terminal may be avoided, thus providing a guarantee for the communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when the relay terminal receives the synchronous reconfiguration indication and the bearer currently configured to bear the transmission of the remote terminal is not the DAPS bearer, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

Referring to FIG. 7, which is a flow chart of a method for releasing a remote terminal provided in an embodiment of the present disclosure. The method is configured to be performed by a relay terminal. As shown in FIG. 7, the method may include, but is not limited to, a step as follows.

In step 71, the first release indication information is sent to the remote terminal, in response to performing a synchronous reconfiguration process, in which the first release indication information is configured to indicate the remote terminal to release the relay terminal.

It may be understood that the relay terminal may perform the synchronous reconfiguration process as needed to realize a cell handover.

Therefore, when performing the synchronous reconfiguration process, the relay terminal may send the first release indication information to the remote terminal, so that the remote terminal knows a handover operation performed by the relay terminal and release the relay terminal in time. Therefore, a communication failure in the remote terminal caused by the handover operation performed by the relay terminal may be avoided, thus providing a guarantee for a communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when performing the synchronous reconfiguration process, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

Referring to FIG. 8, FIG. 8 is a flow chart of a method for releasing a remote terminal provided in an embodiment of the present disclosure. The method is configured to be performed by a relay terminal. As shown in FIG. 8, the method may include, but is not limited to, a step as follows.

In step 81, the first release indication information is sent to the remote terminal, in response to performing a synchronous reconfiguration process, and a target cell identifier in the synchronous reconfiguration being different from a source cell identifier, in which the first release indication information is configured to indicate the remote terminal to release the relay terminal.

The relay terminal may perform the synchronous reconfiguration process as needed to realize a cell handover.

It may be understood that each cell has its own corresponding cell identifier, and the target cell identifier in the synchronous reconfiguration is different from the source cell identifier, indicating that the relay terminal needs to switch from the source cell to the target cell in the synchronous reconfiguration for a communication transmission.

In the embodiment of the present disclosure, when the relay terminal performs the synchronous reconfiguration process and the target cell identifier in the synchronous reconfiguration is different from the source cell identifier, the relay terminal may send the first release indication information to the remote terminal, so that the remote terminal knows a handover operation performed by the relay terminal and releases the relay terminal in time. Therefore, a communication failure in the remote terminal caused by the handover operation performed by the relay terminal may be avoided, thus providing a guarantee for the communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when the relay terminal performs the synchronous reconfiguration process and the target cell identifier in the synchronous reconfiguration is different from the source cell identifier, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

Referring to FIG. 9, FIG. 9 is a flow chart of a method for releasing a remote terminal provided in an embodiment of the present disclosure. The method is configured to be performed by a relay terminal. As shown in FIG. 9, the method may include, but is not limited to, a step as follows.

In step 91, the first release indication information is sent to the remote terminal, in response to performing a synchronous reconfiguration process, and the relay terminal not containing bearer configuration information of the dual active protocol solution (DAPS), in which the first release indication information is configured to indicate the remote terminal to release the relay terminal.

The relay terminal may realize a cell handover by performing the synchronous reconfiguration process.

It may be understood that in case that the relay terminal does not contain the bearer configuration information of the DAPS, the relay terminal disconnects the connection with the source cell when receiving the synchronous reconfiguration indication to perform a cell handover. Before successfully establishing a connection with the target cell, a data transmission and reception of the relay terminal is interrupted, and a data transmission and reception of the remote terminal that relies on the relay terminal to communicate with the network device is also in an interrupted state, so that a communication transmission cannot be performed in time, which may cause a service delay and affect the quality and efficiency of communication transmission.

Therefore, in the embodiment of the present disclosure, when the relay terminal performs the synchronous reconfiguration process and the relay terminal does not contain the bearer configuration information of the DAPS, the relay terminal may send the first release indication information to the remote terminal, so that the remote terminal knows a handover operation performed by the relay terminal and releases the relay terminal in time. Therefore, a communication failure in the remote terminal caused by the handover operation performed by the relay terminal may be avoided, thus providing a guarantee for the communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when the relay terminal performs the synchronous reconfiguration process and the relay terminal does not contain the bearer configuration information of the DAPS, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

Referring to FIG. 10, FIG. 10 is a flow chart of a method for releasing a remote terminal provided in an embodiment of the present disclosure. The method is configured to be performed by a relay terminal. As shown in FIG. 10, the method may include, but is not limited to, a step as follows.

In step 101, the first release indication information is sent to the remote terminal, in response to performing a synchronous reconfiguration process, and a bearer currently configured to bear a transmission of the remote terminal not being a DAPS bearer, in which the first release indication information is configured to indicate the remote terminal to release the relay terminal.

The relay terminal may realize a cell handover by performing the synchronous reconfiguration process.

It may be understood that when the bearer configured to bear the transmission of the remote terminal is not the DAPS bearer, it may be indicated that a bearer used by the relay terminal transmitting with the remote terminal is also not the DAPS bearer. Therefore, when receiving the synchronous reconfiguration indication to perform the cell handover, the relay terminal disconnects the connection with the source cell. Before successfully establishing a connection with the target cell, a data transmission and reception of the relay terminal is interrupted. However, the remote terminal cannot know an operation performed by the relay terminal, so the remote terminal cannot perform a communication transmission in time, which may cause a service delay and affect the quality and efficiency of the communication transmission.

In the embodiment of the present disclosure, when the relay terminal performs the synchronous reconfiguration process, and the bearer currently configured to bear the transmission of the remote terminal is not the DAPS bearer, the relay terminal may send the first release indication information to the remote terminal, so that the remote terminal knows a handover operation performed by the relay terminal and releases the relay terminal in time. Therefore, a communication failure in the remote terminal caused by the handover operation performed by the relay terminal may be avoided, thus providing a guarantee for the communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when the relay terminal performs the synchronous reconfiguration process and the bearer currently configured to bear the transmission of the remote terminal is not the DAPS bearer, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

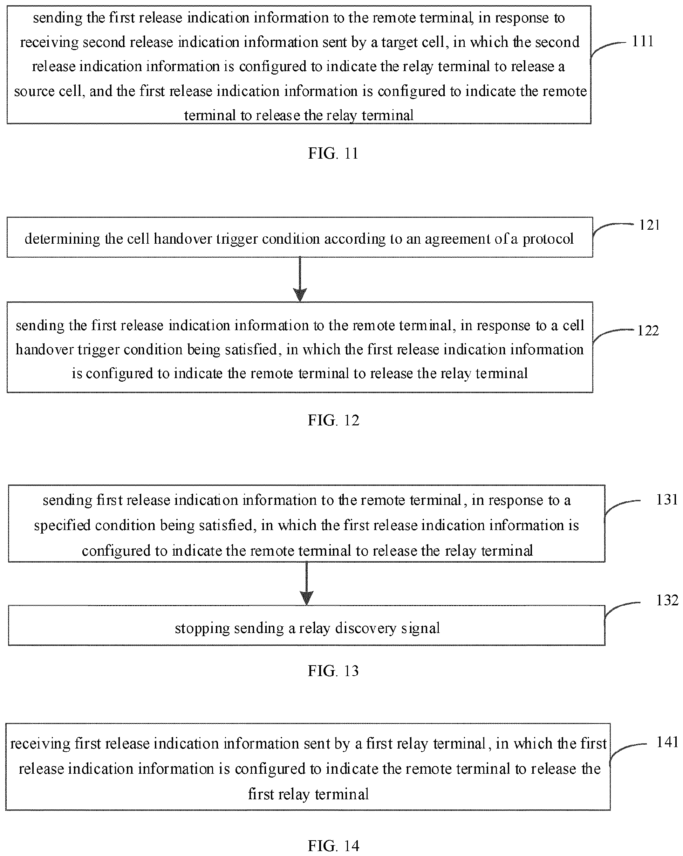

Referring to FIG. 11, FIG. 11 is a flow chart of a method for releasing a remote terminal provided in an embodiment of the present disclosure. The method is configured to be performed by a relay terminal. As shown in FIG. 11, the method may include, but is not limited to, a step as follows.

In step 111, the first release indication information is sent to the remote terminal, in response to receiving second release indication information sent by a target cell, in which the second release indication information is configured to indicate the relay terminal to release a source cell, and the first release indication information is configured to indicate the remote terminal to release the relay terminal.

When receiving the second release indication information sent by the target cell, the relay terminal may disconnect the connection with the source cell, which may cause the interruption of a communication transmission and affect a communication transmission of the remote terminal.

Therefore, in the embodiment of the present disclosure, when receiving the second release indication information sent by the target cell, the relay terminal may send the first release indication information to the remote terminal, so that the remote terminal knows a handover operation performed by the relay terminal and releases the relay terminal in time. Therefore, a communication failure in the remote terminal caused by the handover operation performed by the relay terminal may be avoided, thus providing a guarantee for the communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when receiving the second release indication information sent by the target cell, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

Referring to FIG. 12, FIG. 12 is a flow chart of a method for releasing a remote terminal provided in an embodiment of the present disclosure. The method is configured to be performed by a relay terminal. As shown in FIG. 12, the method may include, but is not limited to, steps as follows.

In step 121, a cell handover trigger condition is determined according to an agreement of a protocol.

The cell handover trigger condition may be determined by the relay terminal according to the agreement of the protocol.

Additionally, the cell handover trigger condition may also be determined by the relay terminal according to an indication from the network device after receiving the indication of the network device, etc., which is not limited in the present disclosure.

In step 122, the first release indication information is sent to the remote terminal, in response to the cell handover trigger condition being satisfied, in which the first release indication information is configured to indicate the remote terminal to release the relay terminal.

It may be understood that, when the cell handover trigger condition is satisfied, the relay terminal may perform a cell handover. At this time, the relay terminal may send the first release indication information to the remote terminal, so that the remote terminal knows a handover operation performed by the relay terminal and releases the relay terminal in time. Therefore, a communication failure in the remote terminal caused by the handover operation performed by the relay terminal may be avoided, thus providing a guarantee for a communication transmission, and further improving the quality and efficiency of the communication transmission.

Additionally, the relay terminal may send the first release indication information to the remote terminal by broadcasting. Alternatively, the relay terminal may send the first release indication information to the remote terminal by unicasting. Alternatively, the relay terminal may send the first release indication information to the remote terminal by broadcasting and by unicasting, etc., which is not limited in the present disclosure.

By implementing the embodiment of the present disclosure, when the cell handover trigger condition is satisfied, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

Referring to FIG. 13, FIG. 13 is a flow chart of a method for releasing a remote terminal provided in an embodiment of the present disclosure. The method is configured to be performed by a relay terminal. As shown in FIG. 13, the method may include, but is not limited to, steps as follows.

In step 131, first release indication information is sent to the remote terminal, in response to a specified condition being satisfied, in which the first release indication information is configured to indicate the remote terminal to release the relay terminal.

It is to be noted that, for the specific content and implementation manner of step 131, reference may be made to the descriptions of other embodiments of the present disclosure, which will not be elaborated herein.

In step 132, a relay discovery signal is stopped sending.

Usually, when the relay terminal perform a cell handover, a communication transmission of the remote terminal may also be affected, and the remote terminal may also need to reselect a relay terminal or select a cell, but the remote terminal cannot know a handover operation performed by the relay terminal in time, which may cause the remote terminal to fail to communicate normally and affect the efficiency and quality of the communication transmission.

In the embodiment of the present disclosure, when performing the cell handover, the relay terminal may stop sending the relay discovery signal, so that the remote terminal cannot discover the relay terminal according to the relay discovery signal, and communicate with the network device by the relay terminal. Therefore, a communication failure in the remote terminal caused by the impact of the relay terminal may be avoided, thus providing a guarantee for the communication transmission, and further improving the quality and efficiency of the communication transmission.

Further, the relay terminal may also notify an upper stratum such as a non-access stratum (NAS), or an application stratum that the specified condition occurs, so that the upper stratum stops sending the relay discovery signal after receiving a notification.

The specified condition may refer to any condition that may affect a normal communication of the remote terminal. The specified condition may be specified in a protocol, or may be configured by a network device for the relay terminal, etc., which is not limited in the present disclosure.

It is to be noted that step 131 may be performed before step 132, or step 132 may be performed before step 131, etc., which is not limited in the present disclosure.

By implementing the embodiment of the present disclosure, in case that the specified condition is satisfied, the relay terminal may send the first release indication information to the remote terminal, so that the remote terminal releases the relay terminal, and may also stop sending the relay discovery signal, so that the remote terminal cannot discover the relay terminal. Therefore, a communication failure in the remote terminal caused by the impact of the relay terminal may be effectively reduced, thus providing a guarantee for the communication transmission, and further improving the quality of the communication transmission.

Referring to FIG. 14, FIG. 14 is a flow chart of a method for releasing a remote terminal provided in an embodiment of the present disclosure. The method is configured to be performed by the remote terminal. As shown in FIG. 14, the method may include, but is not limited to, a step as follows.

In step 141, first release indication information sent by a first relay terminal is received, in which the first release indication information is configured to indicate the remote terminal to release the first relay terminal.

It may be understood that, in case that a network state of the first relay terminal cannot satisfy a communication of the remote terminal, the first release indication information may be sent by the first relay terminal to the remote terminal.

Additionally, the first release indication information received by the remote terminal may be received by broadcasting. Alternatively, the first release indication information received by the remote terminal may be received by unicasting. Alternatively, he first release indication information received by the remote terminal may be received by broadcasting and by unicasting, etc., which is not limited in the present disclosure.

In the embodiment of the present disclosure, after receiving the first release indication information sent by the first relay terminal, the remote terminal may release the first relay terminal in time, and reselect a relay terminal or reselect a cell, so as to ensure a normal communication with the network device, avoid a communication failure in the remote terminal caused by the impact of the first relay terminal, provide a guarantee for a communication transmission, and further improve the quality of the communication transmission.

By implementing the embodiment of the present disclosure, the remote terminal receives the first release indication information sent by the first relay terminal, so as to release the first relay terminal. Therefore, a communication failure in the remote terminal caused by the impact of the first relay terminal may be effectively reduced, thus providing a guarantee for the communication transmission, and further improving the quality of the communication transmission.

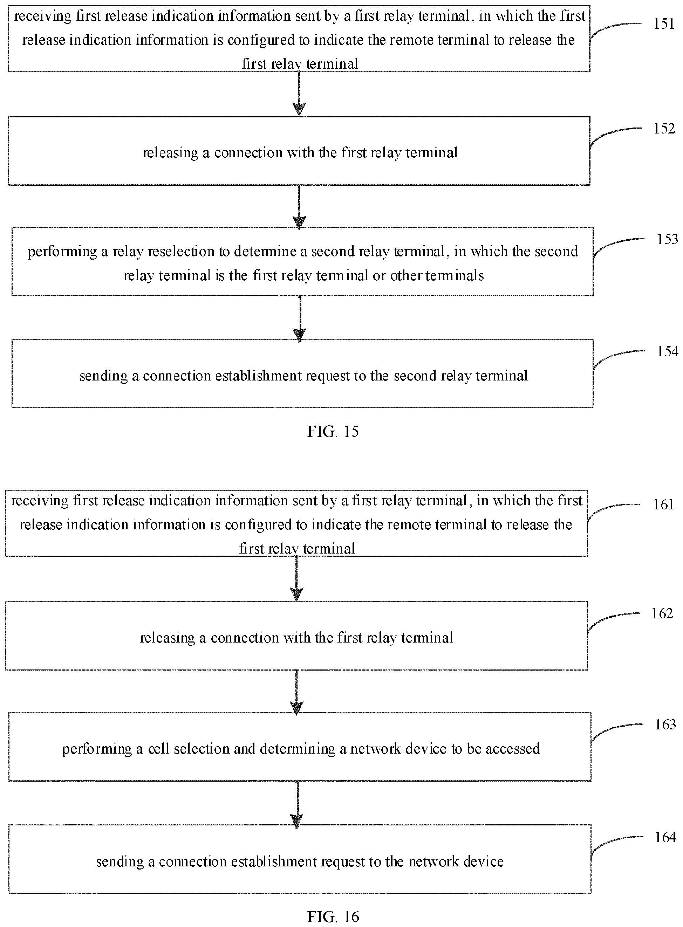

Referring to FIG. 15, FIG. 15 is a flow chart of a method for releasing a remote terminal provided in an embodiment of the present disclosure. The method is configured to be performed by the remote terminal. As shown in FIG. 15, the method may include, but is not limited to, steps as follows.

In step 151, first release indication information sent by a first relay terminal is received, in which the first release indication information is configured to indicate the remote terminal to release the first relay terminal.

It is to be noted that, for the specific content and implementation manner of step 151, reference may be made to the descriptions of other embodiments of the present disclosure, which will not be elaborated herein.

In step 152, a connection with the first relay terminal is released.

In the embodiment of the present disclosure, the remote terminal may release the connection with the first relay terminal after receiving the first release indication information sent by the first relay terminal. Therefore, a communication failure in the remote terminal caused by the impact of the first relay terminal may be effectively reduced.

In step 153, a relay reselection is performed to determine a second relay terminal, in which the second relay terminal is the first relay terminal or other terminals.

The remote terminal may determine the second relay terminal by performing the relay reselection, thus realizing a communication transmission with a network device through the relay of the second relay terminal, providing a guarantee for the communication transmission, and further improving the quality of the communication transmission.

In step 154, a connection establishment request is sent to the second relay terminal.

In the embodiment of the present disclosure, in order to ensure that the remote terminal may continue to communicate with the network device, after determining the second relay terminal, a connection establishment request may be sent to the second relay terminal to establish a connection with the second relay terminal, so that the communication transmission with the network device is realized through a relay function of the second relay terminal. Therefore, a communication failure in the remote terminal caused by the impact of the first relay terminal may be effectively reduced, thus providing a guarantee for the communication transmission, and further improving the quality of the communication transmission.

By implementing the embodiment of the present disclosure, the remote terminal may first receive the first release indication information sent by the first relay terminal, then release the connection with the first relay terminal, then perform the relay reselection to determine the second relay terminal, and then send the connection establishment request to the second relay terminal. Therefore, a communication failure in the remote terminal caused by the impact of the first relay terminal may be effectively reduced, thus providing a guarantee for the communication transmission, and further improving the quality of the communication transmission.

Referring to FIG. 16, FIG. 16 is a flow chart of a method for releasing a remote terminal provided in an embodiment of the present disclosure. The method is configured to be performed by the remote terminal. As shown in FIG. 16, the method may include, but is not limited to, steps as follows.

In step 161, first release indication information sent by a first relay terminal is received, in which the first release indication information is configured to indicate the remote terminal to release the first relay terminal.

In step 162, a connection with the first relay terminal is released.

It is to be noted that, for the specific content and implementation manner of steps 161 to 162, reference may be made to the descriptions of other embodiments of the present disclosure, which will not be elaborated herein.

In step 163, a cell selection is performed and a network device to be accessed is determined.

In step 164, a connection establishment request is sent to the network device.

It may be understood that in order to realize a communication transmission with the network device, the remote terminal may also determine the network device to be accessed by performing the cell selection after releasing the connection with the first relay terminal, and then send the connection establishment request to the network device to establish a connection with the network device, thus realizing the communication transmission with the network device. Therefore, a communication failure in the remote terminal caused by the impact of the first relay terminal may be effectively reduced, thus providing a guarantee for the communication transmission, and further improving the quality of the communication transmission.

By implementing the embodiment of the present disclosure, the remote terminal may first receive the first release indication information sent by the first relay terminal, then release the connection with the first relay terminal, then perform the cell selection and determine the network device to be accessed, and then send the connection establishment request to the network device. Therefore, the communication failure in the remote terminal caused by the impact of the first relay terminal may be effectively reduced, thus providing the guarantee for the communication transmission, and further improving the quality of the communication transmission.

In the above-mentioned embodiments provided in the present disclosure, the methods provided in the embodiments of the present disclosure are introduced from perspectives of the relay terminal and the remote terminal, respectively. In order to realize various functions in the method provided in the above-mentioned embodiment of the present disclosure, the relay terminal and the remote terminal may include a hardware structure and a software module, and the above-mentioned various functions are realized in a form of a hardware structure, a software module, or a hardware structure plus a software module. A certain function in the above-mentioned various functions may be implemented in a form of a hardware structure, a software module, or a hardware structure plus a software module.

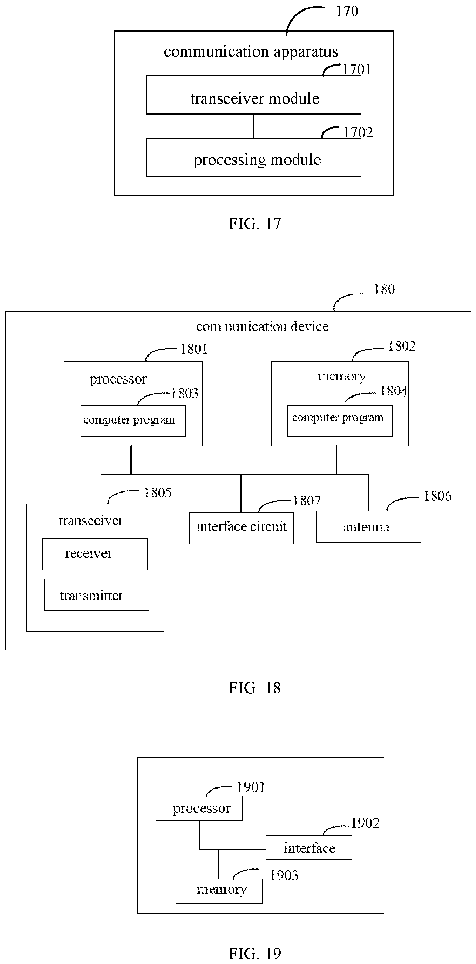

Referring to FIG. 17, FIG. 17 is a schematic diagram of a communication apparatus 170 provided in an embodiment of the present disclosure. The communication apparatus 170 shown in the FIG. 17 may include a transceiver module 1701 and a processing module 1702.

The transceiver module 1701 may include a sending module and/or a receiving module. The sending module is configured to realize a sending function, and the receiving module is configured to realize a receiving function. The transceiver module 1701 may realize the sending function and/or the receiving function.

It may be understood that the communication apparatus 170 may be a relay terminal, may also be an apparatus in the relay terminal, and may also be an apparatus that may be matched and used with the relay terminal.

The communication apparatus 170 is configured on a relay terminal side, and the apparatus includes the transceiver module 1701.

The transceiver module 1701 is configured to send first release indication information to a remote terminal, in response to a specified condition being satisfied, in which the first release indication information is configured to indicate the remote terminal to release the relay terminal.

Additionally, the transceiver module 1701 is specifically configured to send the first release indication information to the remote terminal, in response to receiving a synchronous reconfiguration indication, or send the first release indication information to the remote terminal, in response to receiving a synchronous reconfiguration indication, and a target cell identifier in the synchronous reconfiguration indication being different from a source cell identifier, or send the first release indication information to the remote terminal, in response to receiving a synchronous reconfiguration indication, and the relay terminal not containing bearer configuration information of a dual active protocol solution (DAPS), or send the first release indication information to the remote terminal, in response to receiving a synchronous reconfiguration indication, and a bearer currently configured to bear a transmission of the remote terminal not being a DAPS bearer.

Additionally, the transceiver module 1701 is specifically configured to send the first release indication information to the remote terminal, in response to performing a synchronous reconfiguration process, or send the first release indication information to the remote terminal, in response to performing a synchronous reconfiguration process, and a target cell identifier in the synchronous reconfiguration being different from a source cell identifier, or send the first release indication information to the remote terminal, in response to performing a synchronous reconfiguration process, and the relay terminal not containing bearer configuration information of the dual active protocol solution (DAPS), or send the first release indication information to the remote terminal, in response to performing a synchronous reconfiguration process, and a bearer currently configured to bear a transmission of the remote terminal not being a DAPS bearer.

Additionally, the transceiver module 1701 is specifically configured to send the first release indication information to the remote terminal, in response to receiving second release indication information sent by a target cell, in which the second release indication information is configured to indicate the relay terminal to release a source cell, or send the first release indication information to the remote terminal, in response to a cell handover trigger condition being satisfied.

Additionally, the apparatus further includes the processing module 1702. The processing module 1702 is configured to determine the cell handover trigger condition according to an agreement of a protocol. Alternatively, the processing module 1702 is configured to determine the cell handover trigger condition according to an indication from a network device.

Additionally, the transceiver module 1701 is specifically configured to send the first release indication information to the remote terminal by broadcasting, and/or send the first release indication information to the remote terminal by unicasting.

Additionally, the transceiver module 1701 is further configured to stop sending a relay discovery signal.

According to the communication apparatus provided in the present disclosure, in case that the specified condition is satisfied, the relay terminal may send the first release indication information to the remote terminal, so that the remote terminal releases the relay terminal. Therefore, a communication failure in the remote terminal caused by the impact of the relay terminal may be effectively reduced, thus providing a guarantee for the communication transmission, and further improving the quality of the communication transmission.

It may be understood that a communication apparatus 170 may also be a remote terminal, may also be an apparatus in the remote terminal, or may also be an apparatus that may be matched and used with the remote terminal.

The communication apparatus 170 is configured on a remote terminal side, and the apparatus includes a transceiver module 1701. The transceiver module 1701 is configured to receive first release indication information sent by a first relay terminal, in which the first release indication information is configured to indicate the remote terminal to release the first relay terminal

Additionally, the apparatus further includes a processing module 1702. The processing module 1702 is configured to release a connection with the first relay terminal.

Additionally, the processing module 1702 is further configured to perform a relay reselection to determine a second relay terminal, in which the second relay terminal is the first relay terminal or other terminals, or perform a cell selection and determine a network device to be accessed.

Additionally, the transceiver module 1701 is further configured to send a connection establishment request to the second relay terminal, or send a connection establishment request to the network device

In the communication apparatus provided in the present disclosure, the remote terminal receives the first release indication information sent by the first relay terminal, in which the first release indication information is configured to indicate the remote terminal to release the first relay terminal. Therefore, a communication failure in the remote terminal caused by the impact of the first relay terminal may be effectively reduced, thus providing a guarantee for the communication transmission, and further improving the quality of the communication transmission.

Referring to FIG. 18, FIG. 18 is a schematic diagram of another communication device 180 provided in an embodiment of the present disclosure. The communication device 180 may be a relay terminal, may be a remote terminal, may be a chip, a chip system, or a processor that supports the relay terminal to implement the above-mentioned method, or may be a chip, a chip system, or a processor that supports the remote terminal to implement the above-mentioned method. The device may be configured to implement the method described in the above-mentioned method embodiment. For details, reference may be made to the description in the above-mentioned method embodiment.

The communication device 180 may include one or more processors 1801. The processor 1801 may be a generic processor, a specific processor, or the like. For example, the processor 1801 may be a baseband processor or a central processor. The baseband processor may be configured to process a communication protocol and communication data, and the central processor may be configured to control a communication device (such as, a base station, a baseband chip, a terminal, a terminal chip, a DU, or a CU, etc.), execute computer programs, and process data of the computer programs.

Additionally, the communication device 180 may further include one or more memories 1802, on which a computer program 1804 may be stored, and the processor 1801 executes the computer program 1804, so that the communication device 180 executes the method described in the above-mentioned method embodiments. Additionally, data may also be stored in the memory 1802. The communication device 180 and the memory 1802 may be set separately or integrated together.

Additionally, the communication device 180 may further include a transceiver 1805 and an antenna 1806. The transceiver 1805 may be referred to as a transceiver unit, a transceiver machine, or a transceiver circuit, etc., and is configured to realize a transceiver function. The transceiver 1805 may include a receiver and a transmitter. The receiver may be referred to as a receiver machine or a receiving circuit, etc., for realizing a receiving function. The transmitter may be referred to as a transmitting machine or a transmitting circuit, etc., and is configured to realize a transmitting function.

Additionally, the communication device 180 may further include one or more interface circuits 1807. The interface circuit 1807 is configured to receive code instructions and transmit the code instructions to the processor 1801. The processor 1801 executes the code instructions to enable the communication device 180 to perform the method described in the above-mentioned method embodiments.

The communication device 180 is the relay terminal. The transceiver 1805 is configured to execute step 21 in FIG. 2, Step 31 in FIG. 3, Step 41 in FIG. 4, Step 51 in FIG. 5, Step 55 in FIG. 5, Step 61 in FIG. 6, Step 71 in FIG. 7, Step 81 in FIG. 8, Step 91 in FIG. 9, Step 101 in FIG. 10, Step 111 in FIG. 11, Step 122 in FIG. 12, Step 131 in FIG. 13, or step 132 in FIG. 13. The processor 1801 is configured to execute step 121 in FIG. 12.

The communication device 180 is the remote terminal. The transceiver 1805 is configured to execute step 141 in FIG. 14, Step 151 in FIG. 15, Step 154 in FIG. 15, Step 161 in FIG. 16, or step 164 in FIG. 16. The processor 1801 is configured to execute step 152 in FIG. 15, Step 153 in FIG. 15, Step 162 in FIG. 16, or step 163 in FIG. 16.

In an implementation, the processor 1801 may include a transceiver configured to receive and transmit functions. For example, the transceiver may be a transceiver circuit, an interface, or an interface circuit. The transceiver circuit, the interface, or the interface circuit configured to receive and transmit the functions may be separated or integrated together. The transceiver circuit, the interface, or the interface circuit may be configured to read and write codes/data, or the transceiver circuit, the interface, or the interface circuit may be configured for signal transmission or transfer.

In an implementation, the processor 1801 may store a computer program 1803, and the computer program 1803 runs on the processor 1801, which may cause the communication device 180 to execute the methods described in the above-mentioned method embodiments. The computer program 1803 may be solidified in the processor 1801, and in this case, the processor 1801 may be implemented by a hardware.

In an implementation, the communication device 180 may include a circuit, and the circuit may realize a function of transmitting, receiving or communicating in the above-mentioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and the transceiver may also be manufactured by using various IC process technologies, such as complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above-mentioned embodiment may be the relay terminal or the remote terminal, but the scope of the communication device described in the present disclosure is not limited thereto, and a structure of the communication device may not be limited by FIG. 18. The communication device may be a stand-alone device or may be part of a larger device. For example, the communication device may be: (1) a stand-alone integrated circuit (IC), a chip, or a chip system or a subsystem; (2) a set of one or more ICs, additionally, the set of the IC may also include storage components for storing data and computer programs; (3) an ASIC, such as a modem; (4) a module that may be embedded in other devices; (5) a receiver, a terminal, an intelligent terminal, a cellular phone, a wireless device, a handset, a mobile unit, a vehicle-mounted device, a network device, a cloud equipment, an artificial intelligence device, etc.; (6) other devices, and so on.

For a case that the communication device may be a chip or a chip system, referring to a schematic diagram of a chip shown in FIG. 19. The chip shown in FIG. 19 includes a processor 1901 and an interface 1902. The number of processors 1901 may be one or more, and the number of interfaces 1902 may be multiple.

For a case that the chip is configured to realize a function of the relay terminal in the embodiment of the present disclosure.

The interface 1902 is configured to execute step 21 in FIG. 2, Step 31 in FIG. 3, Step 41 in FIG. 4, Step 51 in FIG. 5, Step 55 in FIG. 5, Step 61 in FIG. 6, Step 71 in FIG. 7, Step 81 in FIG. 8, Step 91 in FIG. 9, Step 101 in FIG. 10, Step 111 in FIG. 11, Step 122 in FIG. 12, Step 131 in FIG. 13, or step 132 in FIG. 13.

For a case that the chip is configured to realize a function of the remote terminal in the embodiment of the present disclosure.

The interface 1902 is configured to execute step 141 in FIG. 14, Step 151 in FIG. 15, Step 154 in FIG. 15, Step 161 in FIG. 16, or step 164 in FIG. 16.

Additionally, the chip further includes a memory 1903 configured to store necessary computer programs and data.

Those skilled in the art may also understand that various illustrative logical blocks and steps listed in the embodiments of the present disclosure may be implemented by an electronic hardware, a computer software, or a combination thereof. Whether this function is realized by a hardware or a software depends on a specific application and design requirements of the whole system. Those skilled in the art may use various methods to realize the described functions for each specific application, but this realization should not be understood as beyond the scope of protection of the embodiments of the present disclosure.

The embodiment of the present disclosure also provides a system for releasing a remote terminal. The system includes the communication apparatus as the relay terminal and the communication apparatus as the remote terminal in the embodiment of FIG. 17. Alternatively, the system includes the communication device as the relay terminal and the communication device as the remote terminal in the embodiment of FIG. 18.

The present disclosure also provides a computer-readable storage medium having stored therein instructions that, when executed by a computer, cause functions of any one of the above-mentioned method embodiments to be implemented.

The present disclosure also provides a computer program product that, when executed by a computer, cause functions of any one of the above-mentioned method embodiments to be implemented.

In the above-mentioned embodiments, all or part of the functions may be realized by a software, a hardware, a firmware or any combination thereof. When the functions is realized by using a software, all or part of the functions may be realized in a form of a computer program product. The computer program product includes one or more computer programs. When the computer program is loaded and executed on a computer, all or part of the functions is generated according to the processes or functions the embodiments of the present disclosure. The computer may be a generic computer, a specific computer, a computer network, or other programmable devices. The computer program may be stored in the computer-readable storage medium or transmitted from one computer-readable storage medium to another computer-readable storage medium. For example, the computer program may be transmitted from a website, a computer, a server or a data center to another website, another computer, another server or another data center in a wired (for example, a coaxial cable, an optical fiber, a digital subscriber line (DSL)) or wireless (for example, infrared, wireless, microwave, etc.) manner. The computer-readable storage medium may be any available medium that may be accessed by a computer or integrated with a data storage device such as a server, a data center that contains one or more available media. The available medium may be a magnetic medium (for example, a floppy disk, a hard disk, a magnetic tape), an optical medium (for example, a high-density digital video disc (DVD)), or a semiconductor medium (for example, a solid state disk (SSD)), etc.

It may be understood by those of ordinary skill in the art that numerical numbers such as the first, the second and the like involved in the present disclosure are merely a convenient distinction for description, and are not used to limit the scope of the embodiments of the present disclosure, but also indicate the sequence.

At least one of the present disclosure may also be described as one or plurality, and the plurality may be two, three, four or more, which is not limited in the present disclosure. In an embodiment of the present disclosure, for one technical feature, a technical feature in the technical feature is distinguished by "first," "second," "third," "A," "B," "C," and "D". There is no precedence or magnitude order between the technical features described by "first," "second," "third," "A," "B," "C," and "D".

A correspondence shown in each table in the present disclosure may be configured or predefined. Values of the information in each table are merely examples, and may be configured as other values, which is not limited in the present disclosure. When configuring a correspondence between information and parameters, it is not necessary to configure all correspondences shown in each table. For example, in the table in the present disclosure, a correspondence shown in some rows may not be configured. For another example, appropriate deformation adjustments may be made based on the above-mentioned table, such as splitting, merging, and so on. Names of the parameters shown in the titles of the above-mentioned tables may also adopt other names that may be understood by the communication device, and values or representations of the parameters may also be other values or representations that may be understood by the communication device. Other data structures may also be adopted when the above-mentioned tables are implemented, such as arrays, queues, containers, stacks, linear tables, pointers, linked lists, trees, graphs, structures, classes, heaps, hash tables, etc.

The pre-definition in the present disclosure may be understood as definition, definition in advance, storage, pre-storage, pre-negotiation, pre-configuration, curing, or pre-firing.

Those of ordinary skill in the art may appreciate that units and algorithm steps of various examples described in conjunction with the embodiments disclosed herein may be implemented in an electronic hardware, or a combination of a computer software and the electronic hardware. Whether these functions are executed in a hardware or a software depends on the specific application and design constraints of the technical solution. Those skilled in the art may use different methods to implement the described functions for each specific application, but such implementation should not be considered beyond the scope of the present disclosure.

It may be clearly understood by those skilled in the art that for the convenience and conciseness of the description, specific working processes of the above-described systems, the apparatuses and the units may refer to corresponding processes in the above-mentioned method embodiments, which will not be elaborated herein.

The above is merely the specific implementation of the present disclosure, and the scope of the protection of the present disclosure is not limited thereto. Changes or substitutions will readily occur to those skilled in the art within the technical scope of the present disclosure, which is to be covered the scope of protection of the present disclosure. Therefore, the scope of protection of the present disclosure is as set forth in the scope of protection of the claims.

## Claims

1. A method for releasing a remote terminal, configured to be performed by a relay terminal, comprising:
sending first release indication information to the remote terminal, in response to a specified condition being satisfied, wherein the first release indication information is configured to indicate the remote terminal to release the relay terminal.

2. The method of claim 1, wherein sending the first release indication information to the remote terminal, in response to the specified condition being satisfied comprises:
sending the first release indication information to the remote terminal, in response to receiving a synchronous reconfiguration indication; or
sending the first release indication information to the remote terminal, in response to receiving a synchronous reconfiguration indication, and a target cell identifier in the synchronous reconfiguration indication being different from a source cell identifier; or
sending the first release indication information to the remote terminal, in response to receiving a synchronous reconfiguration indication, and the relay terminal not containing bearer configuration information of a dual active protocol solution (DAPS); or
sending the first release indication information to the remote terminal, in response to receiving a synchronous reconfiguration indication, and a bearer currently configured to bear a transmission of the remote terminal not being a DAPS bearer.

3. The method of claim 1, wherein sending the first release indication information to the remote terminal, in response to the specified condition being satisfied comprises:
sending the first release indication information to the remote terminal, in response to performing a synchronous reconfiguration process; or
sending the first release indication information to the remote terminal, in response to performing a synchronous reconfiguration process, and a target cell identifier in the synchronous reconfiguration being different from a source cell identifier; or
sending the first release indication information to the remote terminal, in response to performing a synchronous reconfiguration process, and the relay terminal not containing bearer configuration information of the dual active protocol solution (DAPS); or
sending the first release indication information to the remote terminal, in response to performing a synchronous reconfiguration process, and a bearer currently configured to bear a transmission of the remote terminal not being a DAPS bearer.

4. The method of claim 1, wherein sending the first release indication information to the remote terminal, in response to the specified condition being satisfied comprises:
sending the first release indication information to the remote terminal, in response to receiving second release indication information sent by a target cell, wherein the second release indication information is configured to indicate the relay terminal to release a source cell; or
sending the first release indication information to the remote terminal, in response to a cell handover trigger condition being satisfied.

5. The method of claim 4, further comprising:
determining the cell handover trigger condition according to an agreement of a protocol; or
determining the cell handover trigger condition according to an indication from a network device.

6. The method of any one of claims 1 to 5, wherein sending the first release indication information to the remote terminal comprises:
sending the first release indication information to the remote terminal by broadcasting; and/or
sending the first release indication information to the remote terminal by unicasting.

7. The method of any one of claims 1 to 5, further comprising:
stopping sending a relay discovery signal.

8. A method for releasing a remote terminal, configured to be performed by the remote terminal, comprising:
receiving first release indication information sent by a first relay terminal, wherein the first release indication information is configured to indicate the remote terminal to release the first relay terminal.

9. The method of claim 8, further comprising:
releasing a connection with the first relay terminal.

10. The method of claim 8 or 9, further comprising:
performing a relay reselection to determine a second relay terminal, wherein the second relay terminal is the first relay terminal or other terminals; or
performing a cell selection and determining a network device to be accessed.

11. The method of claim 10, further comprising:
sending a connection establishment request to the second relay terminal; or
sending a connection establishment request to the network device.

12. A communication apparatus, configured on a relay terminal side, comprising:
a transceiver module configured to send first release indication information to a remote terminal, in response to a specified condition being satisfied, wherein the first release indication information is configured to indicate the remote terminal to release the relay terminal.

13. A communication apparatus, configured on a remote terminal side, comprising:
a transceiver module configured to receive first release indication information sent by a first relay terminal, wherein the first release indication information is configured to indicate the remote terminal to release the first relay terminal.

14. A communication device, comprising:
a processor; and
a memory, wherein a computer program is stored in the memory, and the processor executes the computer program stored in the memory to cause the device to perform the method of any one of claims 1 to 7.

15. A communication device, comprising:
a processor; and
a memory, wherein a computer program is stored in the memory, and the processor executes the computer program stored in the memory to cause the device to perform the method of any one of claims 8 to 11.

16. A communication device, comprising:
an interface circuit configured to receive code instructions and transmit the code instructions to a processor; and
the processor configured to execute the code instructions to execute the method of any one of claims 1 to 7.

17. A communication device, comprising:
an interface circuit configured to receive code instructions and transmit the code instructions to a processor; and
the processor configured to execute the code instructions to execute the method of any one of claims 8 to 11.

18. A computer-readable storage medium having stored therein instructions that, when executed, cause the method of any one of claims 1 to 7 to be implemented.

19. A computer-readable storage medium having stored therein instructions that, when executed, cause the method of any one of claims 8 to 11 to be implemented.
